# EUROPEAN PATENT SPECIFICATION

(11) **EP 0 220 145 B1**
(45) Date of publication and mention of the grant of the patent: **03.11.1993**
(21) Application number: 86850336.8
(22) Date of filing: 07.10.1986
(51) Int. Cl.: H02K 5/22, H01R 13/74, H01R 13/523

(54) **Connection socket for submersible electrical motors**
Verbindungsbuchse für elektrische Unterwassermotoren
Douille de connexion pour moteurs électriques submersibles

(30) Priority: 23.10.1985 SE 8504983
(43) Date of publication of application: 29.04.1987
(73) Proprietor: ITT Flygt Aktiebolag, S-171 25 Solna (SE)
(72) Inventor: Stahl, Torvald, S-125 35 Älvsjö (SE)
(74) Representative: Larsson, Sten

(56) References cited:
- US-A- 2 897 763
- US-A- 3 602 748

## Description

This invention concerns a connection socket for the electric connection to a submersible electric motor or generator.

Connection sockets for this purpose are, especially at big machines, made of an isolated plate provided with a number of pins for the electric conductors which are casted within the plate. At one side of the plate, the underside, the connectors from the electric motor are attached. On the other side of the plate the conductors from a motor cable are connected. The pins are waterproof arranged in the isolated plate and the latter is in its turn waterproof mounted in the wall of the connection box. In this way two independent waterproof isolated rooms are obtained which means that incoming liquid in the upper room is prevented from going into the lower room and into the motor.

US-A-3602 742 shows an example of a connection socket provided with sealingly devided rooms and US-A-2897 763 shows a connector means especially suitable for submersible pump motors.

When mounting the plate the conductors at the underside are first connected to the pins and then the plate is mounted. This means that the conductors at the underside must be relatively long to make the mounting possible. When the plate thereafter is mounted the conductors are packed under the plate and may be squeezed or bent in a non-suitable way thus damaging the isolation. In the prior art mentioned above, this is very likely to happen.

The problem is solved according the invention by help of the device stated in the claims.

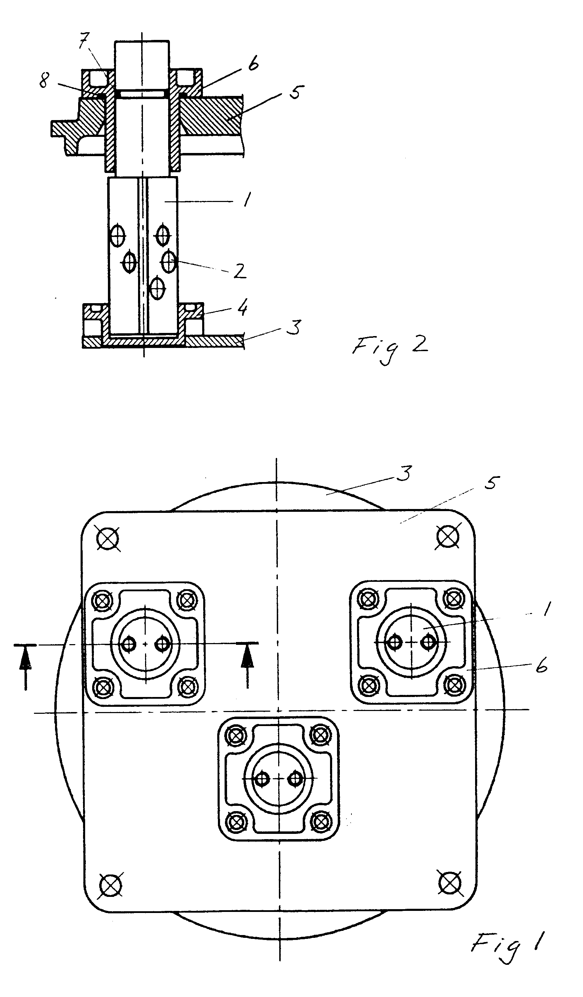

The invention is more closely described below with reference to the drawings. Fig 1 shows a device according to the invention seen from above, while fig 2 shows a vertical section of a part of the device.

In the drawings 1 stands for a connection pin having a hole 2 for a conductor. 3 stands for a lower plate having isolated holders for the pin 1. 5 stands for an upper plate, 6 another isolated holder and 7 and 8 o-rings.

According to the invention the mentioned isolated plate is replaced by two plates 3 and 5. The lower plate 3 is put on its place and the pins 1 are mounted on the plate by help of a holder 4. The plate 3 and the holder 4 now serve to stabilize the pins during the mounting. The conductors from the electric motor which are brought up through the plate 3 are connected to the pins 1 in the holes 2. Superfluous ends are cut and the conductors are so arranged that there are no risks for squeezings or bendings. Then the upper plate 5 is brought downwards over the pins the holes in the plate being somewhat wider than the pins to facilitate the mounting. A supporting and sealing socket 6 of isolated material is brought downwards over each pin and is connected to the plate 5 by screws. In order to secure a perfect sealing o-rings 7 and 8 respectively are arranged between the pin 1 and the socket 6 between the latter and the plate 5. As the socket 6 is made of isolated material the plate 5 may be manufactured in some other material such as cast-iron.

The plate 5 is then sealingly attached to the connection box and an entirely waterproof deviding of the housing has now been obtained. The connection of incoming conductors to the upper parts of the pins 1 is made in the usual way.

The big advantage with the device according to the invention is thus that all connection and mounting may be made under full control and there are no risks for squeezing or bending of the conductors.

## Claims

1. A connection socket for a submersible electric motor or generator for connection of incoming conductors where the connection box for incoming electric conductors is sealingly divided by a partition wall with connection pins (1), **characterized** in, that the connection socket comprises two plates (3) and (5), the connection pins (1) being arranged on the upper side of the lower plate (3) heading the electric motor, that the pins are provided with connection means (2) for the conductors from the electric motor above the plate 3, that the upper plate (5) is mountable around the upper ends of the pins, which upper plate is sealed against the pins and the connection box for sealing the latter in waterproof divided rooms and that the upper ends of the pins above the plate (5) are provided with connection means for incoming cable conductors.

2. Connection socket according to claim 1, **characterized** in, that holders (6) are arranged in the lead through between the pins (1) and the plate (5), o-rings (7) and (8) resp being provided for sealing between the pins and the holder and the holder and the plate resp.

## Patentansprüche

1. Verbindungsbuchse für einen tauchbaren Elektromotor oder Generator zur Verbindung mit Eingangsleitern, wobei die Anschlußdose für elektrische Eingangsleiter durch eine Trennwand mit Vebindungsstiften (1) in abgedichteter Weise geteilt ist,
dadurch gekennzeichnet, daß die Verbindungsbuchse zwei Platten (3) und (5) aufweist, wobei die Verbindungsstifte (1) auf der Oberseite der dem Elektromotor gegenüberliegenden unteren Platte (3) angeordnet sind, daß die Stifte oberhalb der Platte (3) mit einer Anschlußeinrichtung (2) für die Leiter von dem Elektromotor versehen sind, daß die obere Platte (5) um die oberen Enden der Stifte herum montierbar ist, wobei die obere Platte gegenüber den Stiften und der Anschlußdose zum Abdichten derselben in wasserdichte getrennte Kammern in abgedichteter Weise angebracht ist, und daß die oberen Enden der Stifte oberhalb der Platte (5) mit einer Anschlußeinrichtung für Eingangs-Kabelleiter versehen sind.

2. Verbindungsbuchse nach Anspruch 1,
dadurch gekennzeichnet, daß Halter (6) in der Durchführung zwischen den Stiften (1) und der Platte (5) angeordnet sind, wobei O-Ringe (7) bzw. (8) zur Schaffung einer Abdichtung zwischen den Stiften und dem Halter bzw. zwischen dem Halter und der Platte vorgesehen sind.

## Revendications

1. Prise de connexion pour moteur ou générateur électrigue submersible, destinée à la connexion de conducteurs d'entrée, dont le boîtier de connexion pour conducteurs électriques d'entrée est séparée de manière étanche par une cloison partage munie de broches (1) de connexion, caractérisée en ce que la prise de connexion comprend deux plaques (3 et 5), les broches (1) de connexion étant agencées sur la face supérieure de la plaque inférieure (3) qui est située du côté du moteur électrique, en ce que les broches sont munies de moyens de connexion (2) situés au dessus de la plaque (3) pour des conducteurs provenant du moteur électrique, en ce que la plaque supérieure (5) peut être montée autour des extrémités supérieures des broches, la plaque supérieure étant en contact étanche contre les broches et le boîtier de connexion pour rendre étanche à l'eau des chambres séparées de ce dernier, et en ce que les extrémités supérieures des broches situées au-dessus de la plaque (5) sont munies de moyens de connexion pour les conducteurs du câble d'entrée.

2. Prise de connexion selon la revendication 1, caractérisée en ce que des supports (6) sont agencés dans l'espace débouchant entre les broches (1) et la plaque (5), des joints torigues (7 et 8) étant prévus pour assurer l'étanchéité entre les broches et le support, et entre le support et la plaque respectivement.
